# EUROPÄISCHE PATENTSCHRIFT

(11) **EP 0 775 866 B1**
(45) Veröffentlichungstag und Bekanntmachung des Hinweises auf die Patenterteilung: **30.06.1999**
(21) Anmeldenummer: 96118072.6
(22) Anmeldetag: 12.11.1996
(51) Int. Cl.: F16L 59/02, F16L 59/06

(54) **Wärmeisolierende Umhüllung für wärmetechnische Geräte**
Heat insulating coating for thermal apparatus
Enveloppe calorifuge pour appareils thermiques

(30) Priorität: 21.11.1995 DE 19543315
(43) Veröffentlichungstag der Anmeldung: 28.05.1997
(73) Patentinhaber: AEG Hausgeräte GmbH, 90429 Nürnberg (DE)
(72) Erfinder: Caps, Roland, Dr., 63839 Kleinwallstadt (DE); Hetfleisch, Jörg, 63839 Kleinwallstadt (DE)

(56) Entgegenhaltungen:
- EP-A- 0 131 279
- DE-A- 4 307 818
- FR-A- 2 628 179
- US-A- 1 987 798
- US-A- 4 313 993
- US-A- 4 401 706

## Beschreibung

Die Erfindung betrifft eine wärmeisolierende Umhüllung für wärmetechnische Geräte nach dem Oberbegriff des Patentanspruches 1.

Wärmeisolierende Umhüllungen dieser Art für wärmetechnische Geräte sind z. B. aus der DE 40 03 770 C2 bekannt. Solche wärmeisolierenden Umhüllungen bestehen in der Regel aus mit Prägungen versehenen Aluminiumfolien, so daß beim Aufeinanderschichten von mehreren Folien zwischen den einzelnen Folienlagen Kammern entstehen, die mit einem wärmeisolierenden Medium, z. B. Luft, gefüllt sind. Dadurch soll der Wärmeabfluß vom zu schützenden Gerät gedämmt werden. Die Prägungen bei diesen Aluminiumfolien sind nur von geringer Tiefe, so daß der Abstand zwischen den einzelnen aufeinandergeschichteten Aluminiumfolien ebenfalls nur sehr gering ist. Um nun bei einem wärmetechnischen Gerät, z. B. einer Herdmuffel, eine ausreichende Wärmeisolierung zu erreichen, ist bei Verwendung solcher Aluminiumfolien zum Aufbau der erforderlichen Wärmedämmung eine Vielzahl von Folienschichten erforderlich. Dadurch werden die Kosten einer Geräteisolierung jedoch erheblich in die Höhe getrieben. Des weiteren ergeben sich bei solchen Präge-Aluminiumfolien durch die Prägungen unzählige Kontaktstellen zwischen den einzelnen Folienschichten bzw. Folienlagen. Die Folge davon sind eine Vielzahl von Wärmebrücken zwischen den einzelnen Folien, über die bedingt durch die gute Wärmeleitung von Aluminium ein Wärmeübergang stattfindet.

Die EP-A-0131279 offenbart ein Verfahren zum Herstellen eines wärmeisolierenden Profilkörpers für Fenster- oder Türrahmen mit Aluminiumprofilschienen, die über eine wärmeisolierende Brücke miteinander verbunden werden.

Aus US-A-1987798 ist eine aus mehreren Aluminiumfolien aufgebaute Wärmeisolierung bekannt. Die Aluminiumfolien sind durch jeweils ein gewelltes Blech mit Eindellungen voneinander beabstandet. Dieses Abstandhalterblech besteht nicht aus einem wärmeisolierenden Material.

Die US-A-4313993 offenbart eine laminierte Wärmeisolierung mit zwei Kunststoffschichten, die über eine Kunststofflage mit einer Vielzahl von halbkugelförmigen Luftblasen voneinander beabstandet sind. An jede der beiden Kunststoffschichten schließt nach außen eine wärmeisolierende Schicht an, die von einer Metallfolie abgeschlossen sein kann. Diese laminierte Isolierung besteht nicht aus mehreren durch Abstandhalter beabstandeten Aluminiumfolien und ist deshalb auch nicht zur Isolierung von Wärmestrahlung (Strahlungsreflexion), sondern nur für niedrigere Temperaturbereiche geeignet.

Der Erfindung liegt die Aufgabe zugrunde, bei der wärmeisolierenden Umhüllung der in Rede stehenden Art Wärmebrücken zwischen den einzelnen Folienschichten zu vermeiden und damit einen Wärmeabfluß von einer Folie zur benachbarten Folie auszuschließen.

Die Lösung dieser Aufgabe gemäß der Erfindung ist den Merkmalen des Patentanspruches 1 zu entnehmen.

Vorteilhafte weitere Ausgestaltungen des Gegenstandes der Erfindung sind in den vom Anspruch 1 abhängigen Unteransprüchen angegeben.

Durch die vorgeschlagenen Maßnahmen wird erreicht, daß für den Aufbau einer ausreichenden wärmeisolierenden Umhüllung für wärmetechnische Geräte die Anzahl der dafür benötigten Aluminiumfolien erheblich reduziert werden kann.

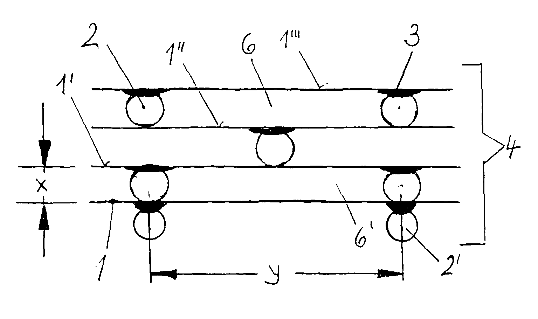

Ein Ausführungsbeispiel der Erfindung ist in der Zeichnung dargestellt und wird anhand dieser nachfolgend näher beschrieben.

In der Figur der Zeichnung ist die erfindungsgemäße Ausbildung der Aluminiumfolie für Isolierzwecke rein schematisch dargestellt.

Auf der einen Oberfläche einer Aluminiumfolie 1 sind mit einem Abstand Y zueinander eine Vielzahl von Abstandshalter 2 mittels eines Klebers 3 befestigt. Die Abstandshalter 2 bestehen aus einem Dämm- bzw. Isolierstoff, wie z. B. Glasschaum, Perlit, Vermiculit, Aerogel oder dgl. und sind kugel- oder halbkugelförmig ausgebildet. Als Kleber für die Abstandshalter 2 kommt zweckmäßig anorganischer Zement oder dgl. zum Einsatz. Solche Abstandshalter haben einen sehr geringen Wärmeleitwert und eine große Festigkeit. Die Höhe X der Abstandshalter ist auf vier bis sieben Millimeter festgelegt. Der Abstand Y zwischen zwei benachbarter Abstandshalter sowohl in Längs- als auch in Breitenrichtung der Folie ist abhängig von der jeweiligen Steifigkeit der Aluminiumfolie und der Folienspannung und sollte etwa in der Größenordnung zwischen zwanzig bis vierzig Millimeter liegen. Nach dem Aushärten des Klebers 3 wird durch Aufeinanderschichten mehrerer Aluminiumfolien 1 ein wärmeisolierendes Umhüllungspaket 4 für ein elektrisches Gerät geschaffen bzw. aufgebaut. Der Aufbau des isolierenden Umhüllungspaketes 4 wird dabei so ausgeführt, daß die Abstandshalter 2 bzw. 2' der aufeinandergeschichteten Aluminiumfolien 1, 1', 1" in den einzelnen Folienebenen entweder versetzt zueinander oder linear übereinander angeordnet sind.

## Patentansprüche

1. Wärmeisolierende Umhüllung für wärmetechnische Geräte, bestehend aus mehreren, mit einem wärmeisolierenden Medium gefüllte Hohlräume umschließenden Aluminiumfolien (1, 1', 1"), die durch voneinander beabstandete Abstandshalter (2) auf Distanz gehalten sind, dadurch gekennzeichnet, daß die Abstandshalter (2) aus jeweils einem Dämm- bzw. Isolierstoff bestehen und jeweils als Kugel oder als Halbkugel ausgebildet sind sowie an den Aluminiumfolien jeweils befestigt sind.

2. Umhüllung nach Anspruch 1, bei der die Abstandshalter (2) mittels eines Klebemittels (3) auf den Folien (1, 1', 1") befestigt sind.

3. Umhüllung nach Anspruch 2, bei der als Klebemittel (3) anorganischer Zement oder dgl. dient.

4. Umhüllung nach einem der vorhergehenden Ansprüche, bei der die Abstandshalter (2) aus Glasschaum, Vermiculit, Perlit, Aerogel oder dgl. bestehen.

5. Umhüllung nach einem der vorangegangenen Ansprüche, bei der die Höhe der Abstandshalter (2) auf vier bis sieben Millimeter festgelegt ist.

6. Umhüllung nach einem der vorangegangenen Ansprüche, bei der zwischen zwei benachbarten Abstandshaltern (2) bzw. Wärmebrücken ein Abstand (Y) zwischen zwanzig bis vierzig Millimeter gewählt ist.

7. Verwendung einer Umhüllung nach einem der vorhergehenden Ansprüche für ein elektrisches wärmetechnisches Gerät.

8. Wärmetechnisches Gerät mit einer Umhüllung nach einem der Ansprüche 1 bis 6.

## Claims

1. heat insulating covering for thermal apparatus, consisting of a plurality of aluminium foils (1, 1', 1") which envelope cavities filled with a heat-insulating medium and which are held apart by spaced spacers (2), characterised in that the spacers (2) consist of a respective insulating material and are formed of respective spheres or hemispheres and are respectively fixed to the aluminium foils.

2. Covering according to claim 1, in which the spacers (2) are fixed to the foils (1, 1', 1") by means of an adhesive (3).

3. Covering according to claim 2, in which the adhesive (3) acts as an inorganic cement or the like.

4. Covering according to one of the preceding claims, in which the spacers (2) consist of glass foam, vermiculite, perlite, aerogel or the like.

5. Covering according to one of the preceding claims, in which the height of the spacers is fixed at four to seven millimetres.

6. Covering according to one of the preceding claims, in which between two adjacent spacers (2) or heat bridges a space (Y) is selected of between twenty and forty millimetres.

7. Use of a covering according to one of the preceding claims for an electric thermal apparatus.

8. Thermal apparatus having a covering according to one of claims 1 to 6.

## Revendications

1. Enveloppe calorifuge pour des appareils thermiques, constituée de plusieurs feuilles d'aluminium (1, 1', 1") renfermant des espaces creux remplis d'un milieu calorifuge, qui sont maintenues à distance les unes des autres par des pièces d'écartement espacées (2), caractérisée en ce que les pièces d'écartement (2) sont constituées respectivement d'un matériau calorifuge respectivement isolant et sont réalisées respectivement sous forme de boule ou demi-boule et sont fixées chacune aux feuilles d'aluminium.

2. Enveloppe selon la revendication 1, où les pièces écartement (2) sont fixées par une colle (3) sur les feuilles (1, 1', 1").

3. Enveloppe selon la revendication 2, où on utilise comme colle (3) du ciment inorganique ou analogue.

4. Enveloppe selon l'une des revendications précédentes, où les pièces d'écartement (2) sont réalisées en mousse de verre, vermiculite, perlite, aérogel ou analogue.

5. Enveloppe selon l'une des revendications précédentes, où la hauteur des pièces d'écartement est fixée à quatre jusqu'à sept millimètres.

6. Enveloppe selon l'une des revendications précédentes, où un écart (Y) entre vingt jusqu'à quarante millimètres a été choisi entre deux pièces écartement avoisinantes (2) respectivement ponts thermiques.

7. Utilisation d'une enveloppe selon l'une des revendications précédentes, pour un appareil électrique thermique.

8. Appareil thermique avec une enveloppe selon l'une des revendications 1 à 6.
